# EUROPEAN PATENT SPECIFICATION

(11) **EP 3 944 463 B1**
(45) Date of publication and mention of the grant of the patent: **02.09.2026**
(21) Application number: 21758576.9
(22) Date of filing: 12.05.2021
(51) Int. Cl.: H02K 5/04, H02K 5/173, H02K 5/20, H02K 9/19

(54) **STATOR CORE COOLING STRUCTURE AND MOTOR COOLING SYSTEM**
KÜHLSTRUKTUR EINES STATORKERNS UND MOTORKÜHLSYSTEM
STRUCTURE DE REFROIDISSEMENT DE NOYAU DE STATOR ET SYSTÈME DE REFROIDISSEMENT DE MOTEUR

(30) Priority: 27.05.2020 CN 202010462729
(43) Date of publication of application: 26.01.2022
(73) Proprietor: Jing-Jin Electric Technologies Co., Ltd., Beijing 100016 (CN)
(72) Inventor: YU, Ping, Beijing 100015 (CN); LING, Xinliang, Beijing 100015 (CN); HEI, Yuxia, Beijing 100015 (CN); HOU, Jiannan, Beijing 100015 (CN); WANG, Haibin, Beijing 100015 (CN)
(74) Representative: AOMB Polska Sp. z.o.o.
(86) International application number: PCT/CN2021/093369
(87) International publication number: WO 2021/238656

(56) References cited:
- WO-A1-2019/091351
- CN-A- 105 431 349
- CN-A- 109 245 404
- CN-A- 110 943 566
- CN-A- 111 509 876
- US-A1- 2005 206 252
- US-A1- 2009 015 081
- US-B2- 7 834 492

## Description

### TECHNICAL FIELD

The present disclosure belongs to the field of motor technology, and in particular to a stator core cooling structure and a motor cooling system.

### BACKGROUND

At present, with the continuous development of the industry, the motor is required to have high performance such as high precision and high power density, which brings about a serious problem of motor heating. The motor heat cannot dissipate only by natural heat dissipation, and the external forced cooling is necessitated.

The conventional method of cooling the inside of motor is to form a groove on the inner wall of the motor housing to dispose a cooling oil circuit. However, the stator core cannot be directly cooled by providing such a cooling oil circuit, and there are problems such as long processing cycle, high manufacturing cost, and cumbersome assembly process when forming grooves on the inner wall of the motor housing.

Document US 2009/015081 A1 discloses a cooling structure of a rotating electrical machine, including a stator and a rotor, the cooling structure including magnet accommodating holes provided in a rotor core of the rotor, the magnet accommodating holes extend between axial core end faces of the rotor core, wherein permanent magnets are accommodated in the magnet accommodating holes; a plurality of voids, which prevent leakage flux, in contact with the permanent magnets and extending between the axial core end faces; and a rotor cooling-liquid supply passage that supplies cooling liquid to one core end face, wherein the cooling liquid supplied from the rotor cooling-liquid supply passage is introduced into the voids to prevent leakage flux, and the permanent magnets are cooled by the cooling liquid flowing through the voids.

Document WO 2019/091351 A1 discloses a motor, a power assembly, a power device, and a motor cooling method. The motor comprises a motor body and an oil cooling mechanism. The oil cooling mechanism comprises: a stator cooling oil tank provided on a first inner wall of a housing opposite to a stator; a winding cooling oil tank provided on the upper part of a second inner wall of the housing opposite to an end winding, the winding cooling oil tank communicating with the stator cooling oil tank; an oil inlet channel provided on the upper part of the housing, the oil inlet channel communicating with the stator cooling oil tank; and an oil outlet channel provided on the lower part of the housing, an annular space between the oil outlet channel and the stator cooling oil tank communicating with an annular space between the housing and the end winding. The oil cooling mechanism will not additionally increase the housing volume of the motor, significantly reduces the thickness of the housing, and ensures the small size of the motor. The oil cooling mechanism causes a cooling oil to directly contact the outer wall of the stator and the end winding, thereby ensuing full cooling and meeting heat dissipation performance under high power of the motor. The oil cooling mechanism makes an oil line system more simple and reliable and has strong adaptability.

Document CN110943566A discloses a motor which comprises a shell, a stator assembly is arranged in the shell, and the stator assembly comprises a stator iron core; a first cooling groove and a second cooling groove communicating with each other are formed in the inner surface of the shell; the first cooling groove is circumferentially arranged around the central axis of the stator iron core; a second cooling groove extends along the direction of the central axis of the stator iron core, and two ends of the second cooling groove respectively extend to two ends of the stator iron core; a stator oil inletis formed in the shell and used for guiding cooling oil into the first cooling groove. The end part of the stator iron core is provided with an end part coil wound by a stator coil; and the second cooling grooves extend to the end part of the stator iron core cooling effect is good, and the performance of the motor is not influenced.

Document CN109245404A discloses a motor housing and a motor. The motor housing comprises a housing; a spiral water channel, an air inlet hole and a communication channel are arranged on the housing. The spiral water channel extends spirally along the axial direction of the housing, the air inlet hole is arranged on the outer surface of the housing and extends radially of the housing, and the communication channel is arranged on the inner peripheral side of the spiral water channel and communicates with the air inlet hole. According to the motor housing of the invention, the radial ventilation holes on the motor stator can be effectively ensured to be located on the same plane, the structure is simple, and the machining difficulty is low.

### SUMMARY

In view of the technical problems in the prior art, the present disclosure provides a motor cooling system to solve or partially solve the above technical problems.

In order to achieve the above object, the present disclosure adopts the following technical solutions.

According to an aspect of the present disclosure, there is provided a motor cooling system comprising a liquid inlet port, a liquid inlet passage, a liquid distribution passage, a stator core cooling structure and a liquid outlet port;
wherein the stator core cooling structure comprises a stator core and a motor housing;
a plurality of axial grooves are distributed on an outer circumference of the stator core and/or an inner circumference of the motor housing, and the axial grooves extend in an axial direction of the stator core and/or the motor housing;
the stator core is assembled in the motor housing, and cooling liquid passages are formed between the stator core and the motor housing by the axial grooves,
the liquid inlet port is arranged in an upper part of the motor housing, and communicates with the stator core cooling structure via the liquid inlet passage and the liquid distribution passage arranged in the motor housing, and the liquid outlet port is arranged on a lower part of a motor front-end cap and/or a motor rear-end cap and/or on a lower end of the motor housing,
the liquid inlet passage and the liquid distribution passage are arranged in the upper part of the motor housing, and the liquid distribution passage is in communication with the liquid inlet passage;
the liquid distribution passage comprises a main passage extending in an axial direction in the upper part of the motor housing and a stator core cooling passage extending downward from the main passage,
characterized in that: the motor cooling system further comprises a bearing lubrication structure, and the bearing lubrication structure is in communication with the main passage;
the liquid distribution passage further comprises a bearing lubrication passage arranged inside the motor front-end cap and the motor rear-end cap;
the bearing lubrication structure comprises a collection tank located in an upper part of a bearing chamber in the motor front-end cap and the motor rear-end cap, the collection tank is in communication with the bearing lubrication passage, and a lower end of the collection tank corresponds to a motor bearing.

Further, there are two main passages, which can be symmetrically arranged on both sides of a vertical center line of the motor housing.

Further, the motor cooling system further comprises a winding cooling structure, and the winding cooling structure is in communication with the main passage;
the liquid distribution passage further comprises a first winding cooling passage and a second winding cooling passage respectively extending downward from the main passage;
the winding cooling structure comprises a first cooling groove and a second cooling groove, the first cooling groove is in communication with the first winding cooling passage, and the second cooling groove is in communication with the second cooling passage;
the first cooling groove and the second cooling groove are annular and are respectively arranged on an inner wall of the motor housing, the first cooling groove corresponds to the front-end winding of the motor, and the second cooling groove corresponds to the rear-end winding of the motor.

Further, inner sides of the motor front-end cap and the motor rear-end cap are respectively provided with arc-shaped baffles, the first cooling groove and the second cooling groove are respectively assembled with the arc-shaped baffles to form annular passages, and a bottom of each annular passage is provided with a liquid spray nozzle.

Further, a drain tank is provided at a lower part of the bearing chamber or at a lower part of a stator installation position of a resolver, and the drain tank is connected to the liquid outlet port.

Further, an inner wall of the motor housing is provided with an annular liquid distribution groove, and a cooling liquid is distributed to the cooling liquid passages via the liquid distribution groove.

Further, the stator core is composed of a plurality of stator punching pieces, and the stator punching pieces are formed by stamping.

In sum, the beneficial effects of the present disclosure are as follows.

In the stator core cooling structure of the present disclosure, axial grooves are provided on the outer circumference of the stator core and/or on the inner circumference of the motor housing. When the stator core is assembled in the motor housing, the cooling liquid passages are formed between the stator core and the motor housing, so that the oil liquid directly contacts and cools the stator core, the contact area is large, and the cooling efficiency is high.

In the present disclosure, the axial grooves on the stator core are formed by stamping, and the stator core cooling structure is simple, thereby solving the problems in the prior art such as long processing cycle, high manufacturing cost, and cumbersome assembly process when forming grooves on the inner wall of the housing. Moreover, in the present disclosure, the motor cooling system can simultaneously realize the cooling of the stator core, the motor windings and the motor bearing, and the lubrication of the motor bearing, and the motor cooling system has a compact structure and good cooling and lubrication effects.

### BRIEF DESCRIPTION OF DRAWINGS

FIG. 1 is a schematic diagram of the structure of a stator core according to an embodiment of the present disclosure;
FIG. 2 is a schematic diagram of the structure of a motor housing according to an embodiment of the present disclosure;
FIG. 3 is a schematic diagram of the assembly of a stator core and a motor housing according to an embodiment of the present disclosure;
FIG. 4 is a right side view of a motor structure according to an embodiment of the present disclosure;
FIG. 5 is a front view of a motor structure according to an embodiment of the present disclosure; and
FIG. 6 is a schematic diagram of the structure of a motor front-end cap or a motor rear-end cap according to an embodiment of the present disclosure.

In the drawings: 1: a stator core; 2: a motor housing; 3: an axial groove; 4: a liquid distribution groove; 5: a liquid inlet port; 6: a liquid inlet passage; 7: a main passage; 8: a liquid outlet port; 9: a motor front-end cap; 10: a motor rear-end cap; 11: a first winding cooling passage; 12: a second winding cooling passage; 13: a stator core cooling passage; 14: a bearing lubrication passage; 15: a first cooling groove; 16: a second cooling groove; 17: an arc-shaped baffle; 18: a liquid spray nozzle; 19: a collection tank; 20: a drain tank.

### DETAILED DESCRIPTION

In order to make the objectives, technical solutions, and advantages of the present disclosure clearer, the embodiments of the present disclosure will be described in further detail in conjunction with the accompanying drawings.

In the description of the present disclosure, it should be noted that the terms "center", "upper", "lower", "left", "right", "vertical", "horizontal", "inner", "outer", etc are orientation or positional relationship based on the drawings, which are merely for convenience of describing the present disclosure and simplifying the description, rather than indicating or implying that the device or component referred to must have a specific orientation, or must be constructed and operated with a specific orientation, so they should not be construed as limiting the present disclosure. In addition, the terms "first", "second", and "third" are only used for the purpose of description, and should not be construed as indicating or implying relative importance.

In the description of the present disclosure, it should be noted that, unless otherwise expressly defined and limited, the terms "installation", "connected", "connection" and the like should be broadly understood, for example, it may be fixedly connected, or detachably connected, or integrally connected; it may be mechanically connected, or electrically connected; it may e directly connected, or indirectly connected via an intermediate element; it may also be the internal communication of two components. For a person of ordinary skill in the art, the specific meaning of the above terms in the present disclosure should be understood according to specific circumstances.

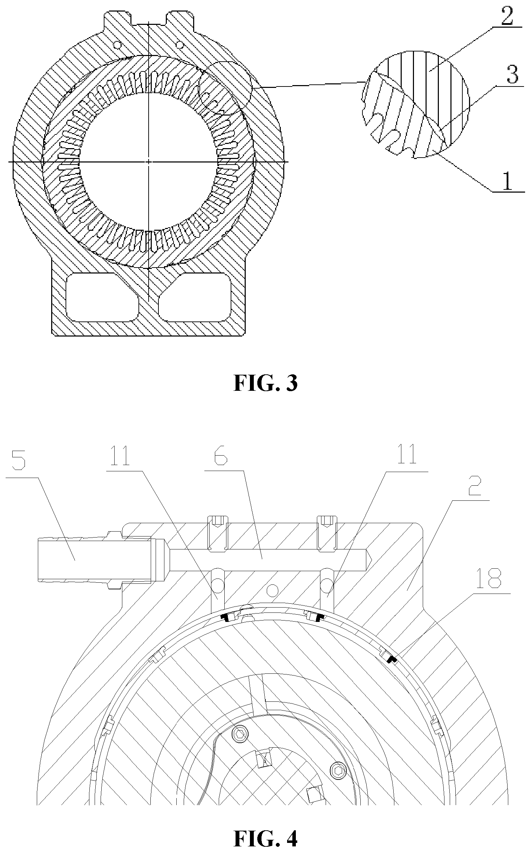

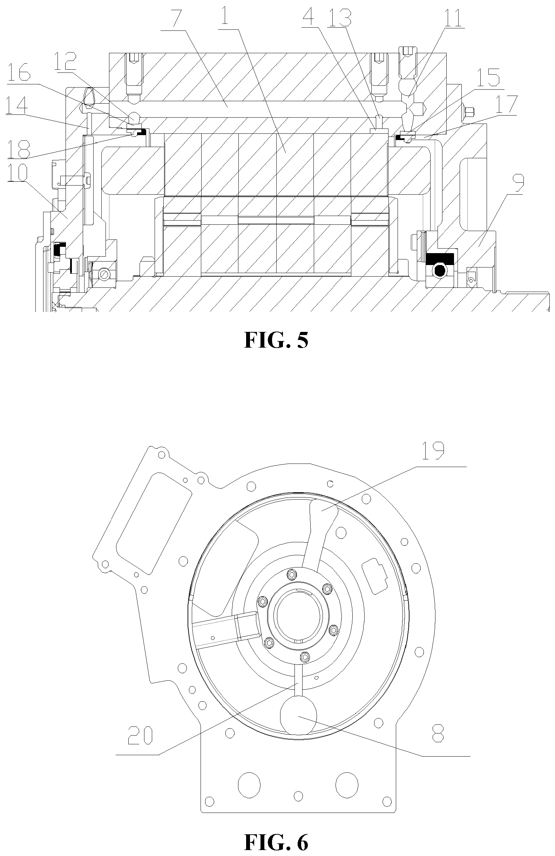

In order to describe the technical solution of the present disclosure more clearly, it is defined in FIGs. 4 and 6 that the left side is the front end or the front side, and the right side is the rear end or the rear side.

### First Embodiment

The embodiment of the present disclosure discloses a stator core cooling structure, which comprises a stator core 1 and a motor housing 2.

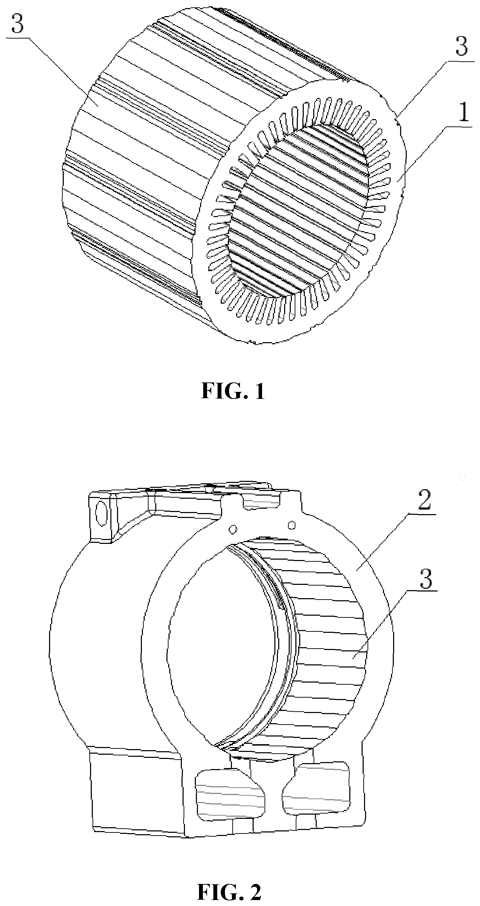

As shown in FIGs. 1-2, there are a plurality of axial grooves 3 distributed on the outer circumference of the stator core 1 and/or on the inner circumference of the motor housing 2. The axial grooves 3 can be of various shapes, such as arc-shaped grooves, V-shaped grooves, polygonal grooves, etc. The axial grooves 3 extend in the axial direction of the stator core 1 and/or the motor housing 2. The axial grooves 3 provided on the stator core 1 extend through the entire stator core 1. The axial grooves 3 provided on the motor housing 2 extend longer than the thickness of the stator core 1, and directly faces the stator core 1. The number and position distribution of the axial grooves 3 can be adjusted according to actual needs.

The stator core 1 is assembled in the motor housing 2. As can be seen from FIG. 3, cooling liquid passages are formed between the stator core 1 and the motor housing 2. The cooling liquid cools the stator core 1 via the cooling liquid passages.

In the stator core cooling structure of the present disclosure, the axial groove 3 may be provided on the stator core 1 or the motor housing 2 or both the stator core 1 and the motor housing 2. Due to the design of the axial groove 3, when the stator core 1 is assembled in the motor housing 2, cooling passages are formed between the stator core 1 and the motor housing 2, via which the oil liquid can directly contact and cool the stator core 1, so the contact area is large, the cooling efficiency is high; moreover, the stator core cooling structure is simple, which solves the problems in the prior art such as long processing cycle, high manufacturing cost, and cumbersome assembly process when forming grooves on the inner wall of the housing.

In an embodiment (mode), the axial grooves can be formed by stacking a plurality of punching pieces, which avoids the problems such as long processing cycle, high manufacturing cost, and cumbersome assembly process when forming grooves on the inner wall of the housing.

An annular liquid distribution groove 4 is provided on the inner wall of the motor housing 2 and communicates with the axial groove 3. The cooling liquid is distributed to the cooling liquid passages via the liquid distribution groove 4. It can be seen from FIG. 4 that the position of the liquid distribution groove 4 faces the stator core 1, and can correspond to an end of the stator core 1 or the middle area of the stator core 1 to achieve the flow of the cooling liquid from one end of the cooling passage to the other end, or from the middle of the cooling passage to both ends. The cooling liquid enters the liquid distribution groove 4 and flows around the motor housing 1, and then is distributed into the cooling liquid passages to take away the heat on the surface of the stator core 1, thereby realizing the cooling of the stator core 1.

In an embodiment, the stator core 1 is composed of a plurality of stator punching pieces. The number of stator punching pieces can be adjusted according to actual needs. The stator punching pieces are formed by stamping, and are simple to manufacture.

### Second Embodiment

The embodiment of the present disclosure discloses a motor cooling system, as shown in FIGs. 4-6, the motor cooling system comprises a liquid inlet port 5, a liquid inlet passage 6, a liquid distribution passage, any one of the above stator core cooling structures, and an liquid outlet port 8.

The liquid inlet port 5 arranged above the motor housing 2 communicates with the stator core cooling structure via the liquid inlet passage 6 and the liquid distribution passage arranged in the motor housing 2. There are one or more liquid outlet ports 8 arranged on a lower part of a motor front-end cap 9 and/or a motor rear-end cap 10, and/or on a lower end of the motor housing 2, so that the oil liquid can be discharged from the inside of the motor after cooling and lubrication are completed.

In this embodiment, the oil liquid enters the motor cooling system via the liquid inlet port 5, enters the main passage 7 of the liquid distribution passage via the liquid inlet passage 6, and then enters the stator core cooling structure via the main passage 7 of the liquid distribution passage, and then the cooling of the stator core 1 is realized, and the oil liquid after cooled is discharged from the motor cooling system via the liquid outlet port 8. The motor cooling system in this embodiment can cool the stator core, and has a compact structure and good cooling and lubrication effects.

In an embodiment (mode), as shown in FIGs.4 and 5, the liquid inlet passage 6 and the liquid distribution passage are arranged in the upper part of the motor housing 2. The liquid inlet passage 6 and the main passage 7 of the liquid distribution passage may be provided to be vertically communicated, in which the main passage 7 of the liquid distribution passage extends axially in the upper part of the motor housing 2 and extends through the motor housing 2, so that the oil liquid can flow to the two ends of the motor, and thus the cooling of the windings at both ends of the motor and the lubricating of the bearings at both ends are realized.

With reference to FIGs. 4 and 5, a stator core cooling passage 13 may be arranged perpendicular to the main passage 7 and extend downward. The stator core cooling passage 13 is arranged between the main passage 7 of the liquid distribution passage and the liquid distribution groove 4, and has a communication function for guiding the oil liquid in the liquid distribution passage 7 to the liquid distribution groove 4. The oil liquid is distributed into the cooling liquid passages in the stator core cooling structure by the liquid distribution groove 4, and then cools the stator core 1.

In an embodiment, preferably, there are two main passages 7 of the liquid distribution passage, which may be symmetrically arranged on both sides of the vertical center line of the motor housing 2. Correspondingly, there are also two stator core cooling passages 13. In actual processing, the number of main passages 7 can be adjusted according to actual needs.

In an embodiment, as shown in FIGs. 4-5, the motor cooling system further comprises a winding cooling structure, which is connected to the main passage 7. The winding cooling structure can realize the cooling of the front and rear motor windings.

The main passage 7 further comprises a first winding cooling passage 11 and a second winding cooling passage 12 respectively arranged downward.

The oil liquid in the main passage 7 can pass through the first winding cooling passage 11 and the second winding cooling passage 12 to cool the front-end winding and the rear-end winding of the motor. The winding cooling structure comprises a first cooling groove 15 and a second cooling groove 16. The first cooling groove 15 is in communication with the first winding cooling passage 11, and the second cooling groove 16 is in communication with the second cooling passage 12. The oil liquid from the main passage 7 of the liquid distribution passage enters the first cooling groove 15 via the first winding cooling passage 11, and enters the second cooling groove 16 via the second cooling passage 12.

The first cooling groove 15 and the second cooling groove 16 are annular and are respectively arranged on the inner wall of the motor housing 2. The first cooling groove 15 corresponds to the front-end winding of the motor, and the second cooling groove 16 corresponds to the rear-end winding of the motor.

In an embodiment, the inner sides of the motor front-end cap 9 and the motor rear-end cap 10 are respectively provided with arc-shaped baffles 17, and the first cooling groove 15 and the second cooling groove 16 are respectively assembled with the arc-shaped baffles 17 to form annular passages. The bottom of each annular passage is provided with a liquid spray nozzle 18. There can be a plurality of liquid spray nozzles 18 arranged evenly. The oil liquid in the annular passage may be sprayed onto the motor windings by the liquid spray nozzles 18 to realize the cooling of the motor windings. The liquid spray nozzle 18 and the arc-shaped baffle 17 may be integrated or assembled.

In an embodiment, as shown in FIGs. 5 and 6, the motor cooling system further comprises a bearing lubrication structure which is in communication with the main passage 7. The bearing lubrication structure can realize the lubrication and cooling of the bearing.

The liquid distribution passage also comprises a bearing lubrication passage 14 arranged inside the motor front-end cap and the motor rear-end cap.

The oil liquid in the main passage 7 passes through the bearing lubrication passage 14 to cool and lubricate the front and rear bearings. The bearing lubrication structure comprises a collection tank 19 arranged in upper parts of the bearing chambers in the motor front-end cap 9 and the motor rear-end cap 10, respectively. The upper ends of the collection tanks 19 communicate with the bearing lubrication passages 14 provided inside the motor front-end cap 9 and the motor rear-end cap 10, and the lower end of the collection tank 19 corresponds to the motor bearing.

The oil liquid in the main passage 7 flows into the collection tank 19 via the bearing lubrication passage 14, and then flows from the collection tank 19 to the motor bearing to lubricate and cool the motor bearing. In addition, an upper end of the collection tank 19 is preferably in the shape of a funnel so as to facilitate the flow of oil liquid in the bearing lubrication passage 14 into the collection tank 19.

In an embodiment, as shown in FIG. 6, a drain tank 20 is provided in the lower part of the bearing chamber in the motor front-end cap 9 and/or the motor rear-end cap 10. The drain tank 20 may also be provided at the lower end of the stator installation position of a resolver. The drain tank 20 can receive the cooling liquid flowing out of the above cooling structures, which can prevent oil liquid stirring and temperature increase caused by excessive oil liquid, thereby avoiding the deterioration of performance and efficiency of the motor. The liquid drain tank 20 is connected to the liquid outlet port 8, and the oil liquid in the drain tank 20 can be discharged via the liquid outlet port 8.

In the present disclosure, the oil liquid enters the motor cooling system from the liquid inlet port 5, then flows through the liquid inlet passage 6 and the main passage 7 in sequence, and then flows from the main passage 7 into the first winding cooling passage 11, the second winding cooling passage 12, the stator core cooling passage 13 and the bearing lubrication passage 14. The oil liquid in the first winding cooling passage 11 is sprayed onto the front-end winding of the motor via the first cooling groove 15 and the liquid spray nozzle 18. The oil liquid in the second winding cooling passage 12 is sprayed onto the rear-end winding of the motor via the second cooling groove 16 and the liquid spray nozzle 18. The oil liquid in the stator core cooling passage 13 flows into the cooling liquid passage formed by the axial groove 3 and the inner wall of the motor housing 2 via the liquid distribution groove 4. The oil liquid in the bearing lubrication passage 14 flows to the motor bearing via the collection tank 19. Finally, the oil liquid flows out of the motor cooling system via the liquid outlet port 8. The motor cooling system can cool the stator core 1, motor windings and motor bearing, and lubricate the motor bearing.

The above description is only specific embodiments of the present disclosure. Based on the above teachings of the present disclosure, those skilled in the art can make other improvements or modifications on the basis of the above embodiments. Those skilled in the art should understand that the above specific description is only for better explaining the present disclosure, and the protection scope of the present disclosure should be subject to the protection scope of the claims.

## Claims

1. A motor cooling system, comprising a liquid inlet port (5), a liquid inlet passage (6), a liquid distribution passage, a stator core cooling structure and a liquid outlet port (8);
wherein the stator core cooling structure comprises a stator core (1) and a motor housing (2);
a plurality of axial grooves (3) are distributed on an outer circumference of the stator core (1) and/or an inner circumference of the motor housing (2), and the axial grooves (3) extend in an axial direction of the stator core (1) and/or the motor housing (2);
the stator core (1) is assembled in the motor housing (2), and cooling liquid passages are formed between the stator core (1) and the motor housing (2) by the axial grooves (3),
the liquid inlet port (5) is arranged in an upper part of the motor housing (2), and communicates with the stator core cooling structure via the liquid inlet passage (6) and the liquid distribution passage arranged in the motor housing (2), and the liquid outlet port (8) is arranged on a lower part of a motor front-end cap (9) and/or a motor rear-end cap (10) and/or on a lower end of the motor housing (2),
the liquid inlet passage (6) and the liquid distribution passage are arranged in the upper part of the motor housing (2), and the liquid distribution passage is in communication with the liquid inlet passage (6);
the liquid distribution passage comprises a main passage (7) extending in an axial direction in the upper part of the motor housing (2) and a stator core cooling passage (13) extending downward from the main passage (7),
wherein the motor cooling system further comprises a bearing lubrication structure, and the bearing lubrication structure is in communication with the main passage (7);
the liquid distribution passage further comprises a bearing lubrication passage (14) arranged inside the motor front-end cap (9) and the motor rear-end cap (10);
the bearing lubrication structure comprises a collection tank (19) located in an upper parts of bearing chambers in the motor front-end cap (9) and the motor rear-end cap (10) respectively, the collection tanks (19) are in communication with the bearing lubrication passages (14), and a lower end of the collection tanks (19) corresponds to a motor bearings.

2. The motor cooling system according to claim 1, **characterized in that**: there are two main passages (7), which can be symmetrically arranged on both sides of a vertical center line of the motor housing (2).

3. The motor cooling system according to claim 1, **characterized in that**: the motor cooling system further comprises a winding cooling structure, and the winding cooling structure is in communication with the main passage (7);
the liquid distribution passage further comprises a first winding cooling passage (11) and a second winding cooling passage (12) respectively extending downward from the main passage (7);
the winding cooling structure comprises a first cooling groove (15) and a second cooling groove (16), the first cooling groove (15) is in communication with the first winding cooling passage (11), and the second cooling groove (16) is in communication with the second cooling passage;
the first cooling groove (15) and the second cooling groove (16) are annular and are respectively arranged on an inner wall of the motor housing (2), the first cooling groove (15) corresponds to the front-end winding of the motor, and the second cooling groove (16) corresponds to the rear-end winding of the motor.

4. The motor cooling system according to claim 1, **characterized in that**: inner sides of the motor front-end cap (9) and the motor rear-end cap (10) are respectively provided with arc-shaped baffles (17), the first cooling groove (15) and the second cooling groove (16) are respectively assembled with the arc-shaped baffles (17) to form annular passages, and a bottom of each annular passage is provided with a liquid spray nozzle (18).

5. The motor cooling system according to claim 1, **characterized in that**: the drain tank (20) is provided at a lower part of the bearing chamber or at a lower part of a stator installation position of a resolver, and the drain tank (20) is connected to the liquid outlet port (8).

6. The motor cooling system according to claim 1, **characterized in that**: an inner wall of the motor housing (2) is provided with an annular liquid distribution groove (4), and a cooling liquid is distributed to the cooling liquid passages via the liquid distribution groove (4).

7. The motor cooling system according to claim 1, **characterized in that**: the stator core (1) is composed of a plurality of stator punching pieces, and the stator punching pieces are formed by stamping.

## Patentansprüche

1. Motorkühlsystem, umfassend eine Flüssigkeitseinlassöffnung (5), einen Flüssigkeitseinlasskanal (6), einen Flüssigkeitsverteilungskanal, eine Statorkernkühlstruktur und eine Flüssigkeitsauslassöffnung (8);
wobei die Statorkernkühlstruktur einen Statorkern (1) und ein Motorgehäuse (2) umfasst;
eine Vielzahl von Axialnuten (3) auf einem Außenumfang des Statorkerns (1) und/oder einem Innenumfang des Motorgehäuses (2) verteilt sind, und die Axialnuten (3) sich in einer Axialrichtung des Statorkerns (1) und/oder des Motorgehäuses (2) erstrecken;
der Statorkern (1) in dem Motorgehäuse (2) zusammengesetzt ist und die Kühlflüssigkeitskanäle zwischen dem Statorkern (1) und dem Motorgehäuse (2) durch die Axialnuten (3) gebildet werden,
die Flüssigkeitseinlassöffnung (5) in einem oberen Teil des Motorgehäuses (2) angeordnet ist und über den Flüssigkeitseinlasskanal (6) und den im Motorgehäuse (2) angeordneten Flüssigkeitsverteilungskanal mit der Statorkernkühlstruktur in Verbindung steht, und die Flüssigkeitsauslassöffnung (8) an einem unteren Teil einer vorderen Endkappe des Motors (9) und/oder einer hinteren Endkappe des Motors (10) und/oder an einem unteren Ende des Motorgehäuses (2) angeordnet ist,
der Flüssigkeitseinlasskanal (6) und der Flüssigkeitsverteilungskanal im oberen Teil des Motorgehäuses (2) angeordnet sind, und der Flüssigkeitsverteilungskanal mit dem Flüssigkeitseinlasskanal (6) in Verbindung steht;
der Flüssigkeitsverteilungskanal einen Hauptkanal (7), der sich in Axialrichtung im oberen Teil des Motorgehäuses (2) erstreckt, und einen Statorkernkühlkanal (13) umfasst, der sich vom Hauptkanal (7) nach unten erstreckt,
wobei das Motorkühlsystem ferner eine Lagerschmierstruktur umfasst, und die Lagerschmierstruktur mit dem Hauptkanal (7) in Verbindung steht;
der Flüssigkeitsverteilungskanal ferner einen Lagerschmierkanal (14) umfasst, der im Inneren der vorderen Endkappe des Motors (9) und der hinteren Endkappe des Motors (10) angeordnet ist;
die Lagerschmierstruktur einen Auffangbehälter (19) umfasst, der sich in einem oberen Teil der Lagerkammern in der vorderen Endkappe des Motors (9) bzw. der hinteren Endkappe des Motors (10) befindet, wobei die Auffangbehälter (19) mit den Lagerschmierkanälen (14) in Verbindung stehen, und ein unteres Ende der Auffangbehälter (19) einem Motorlager entspricht.

2. Motorkühlsystem nach Anspruch 1, **dadurch gekennzeichnet, dass** es zwei Hauptkanäle (7) gibt, die symmetrisch auf beiden Seiten einer vertikalen Mittellinie des Motorgehäuses (2) angeordnet sein können.

3. Motorkühlsystem nach Anspruch 1, **dadurch gekennzeichnet, dass** das Motorkühlsystem ferner eine Wicklungskühlstruktur umfasst, und die Wicklungskühlstruktur mit dem Hauptkanal (7) in Verbindung steht;
der Flüssigkeitsverteilungskanal ferner einen ersten Wicklungskühlkanal (11) und einen zweiten Wicklungskühlkanal (12) umfasst, die sich jeweils von dem Hauptkanal (7) nach unten erstrecken;
die Wickelkühlstruktur eine erste Kühlnut (15) und eine zweite Kühlnut (16) umfasst, wobei die erste Kühlnut (15) mit dem ersten Wickelkühlkanal (11) in Verbindung steht und die zweite Kühlnut (16) mit dem zweiten Kühlkanal in Verbindung steht;
die erste Kühlnut (15) und die zweite Kühlnut (16) ringförmig sind und jeweils an einer Innenwand des Motorgehäuses (2) angeordnet sind, wobei die erste Kühlnut (15) dem vorderen Wickelkopf des Motors entspricht und die zweite Kühlnut (16) dem hinteren Wickelkopf des Motors entspricht.

4. Motorkühlsystem nach Anspruch 1, **dadurch gekennzeichnet, dass** die Innenseiten der vorderen Endkappe des Motors (9) und der hinteren Endkappe des Motors (10) jeweils mit bogenförmigen Leitblechen (17) versehen sind, die erste Kühlnut (15) und die zweite Kühlnut (16) jeweils mit den bogenförmigen Leitblechen (17) zu ringförmigen Kanälen zusammengesetzt sind, und ein Boden jedes ringförmigen Kanals mit einer Flüssigkeitssprühdüse (18) versehen ist.

5. Motorkühlsystem nach Anspruch 1, **dadurch gekennzeichnet, dass** der Ablaufbehälter (20) in einem unteren Teil der Lagerkammer oder in einem unteren Teil einer Stator-Einbauposition eines Resolvers vorgesehen ist, und der Ablaufbehälter (20) mit der Flüssigkeitsauslassöffnung (8) verbunden ist.

6. Motorkühlsystem nach Anspruch 1, **dadurch gekennzeichnet, dass** eine Innenwand des Motorgehäuses (2) mit einer ringförmigen Flüssigkeitsverteilungsnut (4) versehen ist, und eine Kühlflüssigkeit über die Flüssigkeitsverteilungsnut (4) zu den Kühlflüssigkeitskanälen verteilt wird.

7. Motorkühlsystem nach Anspruch 1, **dadurch gekennzeichnet, dass** der Statorkern (1) aus einer Vielzahl von Stator-Stanzteilen besteht und die Stator-Stanzteile durch Stanzen gebildet werden.

## Revendications

1. Un système de refroidissement de moteur, comprenant un port d'entrée de liquide (5), un passage d'entrée de liquide (6), un passage de distribution de liquide, une structure de refroidissement de noyau de stator et un port de sortie de liquide (8) ; dans lequel la structure de refroidissement de noyau de stator comprend un noyau de stator (1) et un boîtier de moteur (2) ;
une pluralité de rainures axiales (3) sont réparties sur une circonférence extérieure du noyau de stator (1) et/ou une circonférence intérieure du boîtier de moteur (2), et les rainures axiales (3) s'étendent dans une direction axiale du noyau de stator (1) et/ou du boîtier de moteur (2) ;
le noyau de stator (1) est monté dans le boîtier de moteur (2), et des passages de liquide de refroidissement sont formés entre le noyau de stator (1) et le boîtier de moteur (2) par les rainures axiales (3),
le port d'entrée de liquide (5) est disposé dans une partie supérieure du boîtier de moteur (2) et communique avec la structure de refroidissement de noyau de stator par l'intermédiaire du passage d'entrée de liquide (6) et du passage de distribution de liquide disposés dans le boîtier de moteur (2), et le port de sortie de liquide (8) est disposé sur une partie inférieure d'un capuchon avant de moteur (9) et/ou d'un capuchon arrière de moteur (10) et/ou sur une extrémité inférieure du boîtier de moteur (2),
le passage d'entrée de liquide (6) et le passage de distribution de liquide sont disposés dans la partie supérieure du boîtier de moteur (2), et le passage de distribution de liquide est en communication avec le passage d'entrée de liquide (6) ;
le passage de distribution de liquide comprend un passage principal (7) s'étendant dans une direction axiale dans la partie supérieure du boîtier de moteur (2) et un passage de refroidissement de noyau de stator (13) s'étendant vers le bas à partir du passage principal (7),
dans lequel le système de refroidissement de moteur comprend en outre une structure de lubrification des roulements, et la structure de lubrification des roulements est en communication avec le passage principal (7) ;
le passage de distribution de liquide comprend en outre un passage de lubrification de roulements (14) disposé à l'intérieur du capuchon avant de moteur (9) et du capuchon arrière de moteur (10) ;
la structure de lubrification de roulements comprend un réservoir collecteur (19) situé dans une partie supérieure des chambres de roulements
du capuchon avant de moteur (9) et du capuchon arrière de moteur (10) respectivement ; les réservoirs collecteurs (19) sont en communication avec les passages de lubrification de roulements (14), et une extrémité inférieure des réservoirs collecteurs (19) correspond aux roulements de moteur.

2. Le système de refroidissement de moteur selon la revendication 1, **caractérisé en ce qu'**il y a deux passages principaux (7), qui peuvent être disposés symétriquement de part et d'autre d'une ligne centrale verticale du boîtier de moteur (2).

3. Le système de refroidissement de moteur selon la revendication 1, **caractérisé en ce que** : le système de refroidissement de moteur comprend en outre une structure de refroidissement d'enroulement, et ladite structure de refroidissement d'enroulement est en communication avec le passage principal (7) ;
le passage de distribution de liquide comprend en outre un premier passage de refroidissement d'enroulement (11) et un deuxième passage de refroidissement d'enroulement (12) s'étendant respectivement vers le bas à partir du passage principal (7) ;
la structure de refroidissement d'enroulement comprend une première rainure de refroidissement (15) et une deuxième rainure de refroidissement (16), la première rainure de refroidissement (15) est en communication avec le premier passage de refroidissement d'enroulement (11), et la deuxième rainure de refroidissement (16) est en communication avec le deuxième passage de refroidissement ;
la première rainure de refroidissement (15) et la deuxième rainure de refroidissement (16) sont annulaires et sont respectivement disposées sur une paroi intérieure du boîtier du moteur (2), la première rainure de refroidissement (15) correspond à l'enroulement avant du moteur, et la deuxième rainure de refroidissement (16) correspond à l'enroulement arrière du moteur.

4. Le système de refroidissement de moteur selon la revendication 1, **caractérisé en ce que** : les faces intérieures du capuchon avant de moteur (9) et du capuchon arrière de moteur (10) sont respectivement pourvues de déflecteurs en forme d'arc (17), la première rainure de refroidissement (15) et la deuxième rainure de refroidissement (16) sont respectivement assemblées avec les déflecteurs en forme d'arc (17) pour former des passages annulaires, et un fond de chaque passage annulaire est pourvu d'une buse de pulvérisation de liquide (18).

5. Le système de refroidissement de moteur selon la revendication 1, **caractérisé en ce que** : le réservoir de vidange (20) est disposé dans une partie inférieure de la chambre de roulement ou dans une partie inférieure d'une position d'installation de stator d'un résolveur, et le réservoir de vidange (20) est relié au port de sortie de liquide (8).

6. Le système de refroidissement de moteur selon la revendication 1, **caractérisé en ce que** : une paroi intérieure du boîtier de moteur (2) est pourvue d'une rainure annulaire de distribution de liquide (4), et un liquide de refroidissement est distribué vers les passages de liquide de refroidissement par l'intermédiaire de la rainure de distribution de liquide (4).

7. Le système de refroidissement de moteur selon la revendication 1, **caractérisé en ce que** : le noyau de stator (1) est composé d'une pluralité de pièces découpées de stator, et lesdites pièces découpées de stator sont formées par emboutissage.
